# EUROPÄISCHE PATENTSCHRIFT

(11) **EP 3 006 835 B1**
(45) Veröffentlichungstag und Bekanntmachung des Hinweises auf die Patenterteilung: **02.11.2016**
(21) Anmeldenummer: 14187859.5
(22) Anmeldetag: 07.10.2014
(51) Int. Cl.: F24D 13/02, E04C 2/52

(54) **Trägeranordnung für elektrische Heizkabel einer Flächenheizung**
Carrier assembly for electrical heating cable of a panel heater
Agencement de support pour un câble chauffant électrique d'un chauffage de surface

(43) Veröffentlichungstag der Anmeldung: 13.04.2016
(73) Patentinhaber: Schlüter-Systems KG, 58640 Iserlohn (DE)
(72) Erfinder: Schlüter, Werner, 58644 Iserlohn (DE)
(74) Vertreter: Albrecht, Dirk

(56) Entgegenhaltungen:
- DE-A1-102006 004 755
- US-A1- 2014 069 039

## Beschreibung

Die vorliegende Erfindung betrifft eine Trägeranordnung für elektrische Heizkabel einer Flächenheizung, umfassend eine folienartig ausgebildete Trägerschicht mit aufwärts vorstehenden Erhebungen, die zwischen sich Heizkabelaufnahmekanäle zur Aufnahme der elektrischen Heizkabel definieren.

Derartige Trägeranordnungen sind im Stand der Technik bereits bekannt. Sie dienen dazu, die Verlegung von elektrischen Heizkabeln einer Flächenheizung zu erleichtern. Elektrische Flächenheizungen weisen gegenüber herkömmlichen Flächenheizungen, bei denen Wasser als Heizfluid dient, den Vorteil auf, dass sie eine wesentlich geringere Aufbauhöhe aufweisen, weshalb sich diese insbesondere zur nachträglichen Installation eignen, wie beispielsweise im Rahmen von Renovierungsarbeiten, um nur ein Beispiel zu nennen. Ein weiterer Vorteil elektrischer Flächenheizungen besteht darin, dass sie gegenüber herkömmlichen Flächenheizungen wesentlich kürzere Aufheizzeiten aufweisen, so dass sie innerhalb einer sehr kurzen Zeitdauer nach dem Einschalten eine spürbare Wirkung entfalten. Vor diesem Hintergrund ist es nicht selten der Fall, dass zusätzlich zu einer herkömmlichen Flächenheizung eine elektrische Flächenheizung installiert wird, um insbesondere im Frühjahr und im Herbst schnell auf wechselhafte Temperaturen reagieren zu können, ohne die Hauptheizung anstellen zu müssen.

Trägeranordnungen laut dem Oberbegriff des Anspruchs 1 sind in den Druckschriften US 2014/0069039 A1 und DE 10 2006 004 755 A1 beschrieben. Ausgehend von diesem Stand der Technik ist es eine Aufgabe der vorliegenden Erfindung, bestehende elektrische Flächenheizungssysteme weiter zu verbessern, insbesondere hinsichtlich noch kürzerer Aufheizzeiten.

Zur Lösung dieser Aufgabe schafft die vorliegende Erfindung eine Trägeranordnung der eingangs genannten Art, die dadurch gekennzeichnet ist, dass an der Unterseite der Trägerschicht eine Wärmebarriereschicht befestigt ist. Die erfindungsgemäße Wärmebarriereschicht hat den Vorteil, dass während des Anheizens einer elektrischen Flächenheizung von einem in den Heizkabelaufnahmekanälen aufgenommenen elektrischen Heizkabel abgegebene Wärmeenergie zu überwiegenden Teilen zur Oberseite der Trägeranordnung abgegeben wird. Entsprechend kann die Aufheizzeit einer elektrischen Flächenheizung Dank der Wärmebarriereschicht stark verkürzt werden. Untersuchungen in diesem Zusammenhang haben ergeben, dass eine Verkürzung der Aufheizphase von bis zu 40 % erzielbar ist. Auf den dauerhaften Betrieb einer elektrischen Flächenheizung wirkt sich die erfindungsgemäße Wärmebarriereschicht hingegen kaum aus. Sobald die von den Heizkabeln abgegebene Wärme die Wärmebarriereschicht durchdrungen hat, stellt sich ein Gleichgewicht ein, so dass Wärme gleichermaßen zu beiden Richtungen abgegeben wird, also sowohl in Richtung Raum als auch in Richtung Untergrund. Die Wärmebarriereschicht kann an die Unterseite der Trägerschicht unter Verwendung eines geeigneten Klebers geklebt sein. Alternativ kann sie auch aufkaschiert oder auf andere Art und Weise befestigt sein.

Erfindungsgemäß weist die Wärmebarriereschicht eine Höhe im Bereich von 1 bis 3 mm auf, insbesondere im Bereich von 1,5 bis 2,5 mm. Untersuchungen haben ergeben, dass Wärmebarriereschichten mit einer Höhe von weniger als 1 mm keine wesentliche Verkürzung der Aufheizzeit erbringen. Höhen von mehr als 3 mm führen nur zu einer unwesentlichen weiteren Verbesserung der Aufheizzeiten. Darüber hinaus sollen 3 mm nicht überschritten werden, da sonst die Aufbauhöhe der Trägeranordnung insgesamt zu groß wird, was insbesondere hinsichtlich ihres Einsatzes im Rahmen von Renovierungsarbeiten nicht wünschenswert ist.

Gemäß einer Variante der vorliegenden Erfindung ist die Wärmebarriereschicht aus einem geschäumten Material hergestellt, wie beispielsweise Polystyrolschaum, oder aus einem Vliesmaterial.

Vorteilhaft ist an der Unterseite der Trägeranordnung eine Haftvermittlungsschicht vorgesehen. In einer solchen Haftvermittlerschicht verkrallt sich ein Kleber oder Mörtel, der zum Befestigen der Trägeranordnung an einem Untergrund verwendet wird. Entsprechend wird eine sichere Fixierung der Trägeranordnung bei der Montage gewährleistet. Die Haftvermittlungsschicht kann als separate Schicht an der Wärmebarriereschicht befestigt sein. So kann diese beispielsweise mit der Wärmebarriereschicht verklebt sein. Alternativ können die Wärmebarriereschicht und die Haftvermittlungsschicht auch einteilig ausgebildet sein. So kann die Unterseite einer aus einem Vliesmaterial hergestellten Wärmebarriereschicht auch gleichzeitig als Haftvermittlungsschicht dienen.

Die Wärmebarriereschicht ist vorteilhaft druckstabil ausgebildet. Entsprechend können äußere Belastungen gut zum Untergrund abgeleitet werden.

Bevorzugt weisen die Randbereiche der Erhebungen von oben betrachtet Hinterschneidungen auf, die einen Teil der Heizkabelaufnahmekanäle definieren. Derartige Hinterschneidungen erleichtern ein Fixieren der elektrischen Heizkabel an der Trägeranordnung.

Vorteilhaft sind die Abstände zwischen den Erhebungen bezogen auf den Außendurchmesser der aufzunehmenden Heizkabel derart eng, dass die Heizkabel zwischen zwei benachbarten Erhebungen von oben nach Art einer Schnappverbindung unter Aufweitung des Abstands in die Heizkabelaufnahmekanäle gedrückt werden können. Mit anderen Worten können die Heizkabel bei einer solchen Ausbildung der Trägerschicht einfach in die Heizkabelaufnahmekanäle eingeclipst werden, wodurch eine automatische Fixierung erfolgt.

Vorteilhaft sind innerhalb der Erhebungen Vertiefungen ausgebildet, deren Grund auf Höhe der Unterseite der Trägerschicht angeordnet ist. Dank solcher Vertiefungen innerhalb der Erhebungen kann ein Lastabtrag zur Unterseite der Trägeranordnung verbessert werden.

Bevorzugt handelt es sich bei der Trägeranordnung um eine aufrollbare Matte. Aufrollbare Matten haben gegenüber herkömmlichen Platten den Vorteil, dass sie einfacher transportiert und schneller verlegt werden können.

Weitere Merkmale und Vorteile der vorliegenden Erfindung werden anhand der nachfolgenden Beschreibung einer Trägeranordnung gemäß einer Ausführungsform der vorliegenden Erfindung unter Bezugnahme auf die beiliegende Zeichnung deutlich. Darin ist
Figur 1 eine teilweise geschnittene perspektivische Ansicht einer Trägeranordnung gemäß einer Ausführungsform der vorliegenden Erfindung und
Figur 2 eine Schnittansicht der in Figur 1 dargestellten Trägeranordnung im montierten Zustand.

Die Figuren zeigen eine Trägeranordnung 1 gemäß einer Ausführungsform der vorliegenden Erfindung für elektrische Heizkabel 2 einer Flächenheizung, wie beispielsweise einer Fußboden- oder Wandheizung. Die Trägeranordnung 1 weist die Form einer aufrollbaren Matte auf und umfasst an ihrer Oberseite eine folienartig ausgebildet Trägerschicht 3, die vorliegend aus Polypropylen hergestellt ist, wobei grundsätzlich auch andere Kunststoffe verwendet werden können. Die Trägerschicht 3 umfasst verteilt über ihre Oberfläche eine Vielzahl von aufwärts vorstehenden Erhebungen 4, die zwischen sich Heizkabelaufnahmekanäle 5 zur Aufnahme der elektrischen Heizkabel 2 bilden. Die Randbereiche der Erhebungen 4 weisen von oben betrachtet Hinterschneidungen auf, die einen Teil der Heizkabelaufnahmekanäle 5 definieren. Die Abstände zwischen den Erhebungen 4 sind bezogen auf den Außendurchmesser der aufzunehmenden Heizkabel 2 dabei derart eng gewählt, dass die Heizkabel 2 zwischen zwei benachbarten Erhebungen 4 von oben nach Art einer Schnappverbindung unter Aufweitung des Abstands in die Heizkabelaufnahmekanäle 5 gedrückt werden können, so dass die Heizkabel 2 sicher in den entsprechenden Heizkabelaufnahmekanälen 5 gehalten sind. Innerhalb der Erhebungen 4 sind Vertiefungen 6 ausgebildet, deren Grund 7 auf Höhe der Unterseite der Trägerschicht 3 angeordnet ist. An der Unterseite der Trägerschicht 3 ist eine druckstabile Wärmebarriereschicht 8 befestigt, die vorliegend aus einem Vliesmaterial hergestellt ist und eine Höhe im Bereich von 1 bis 3 mm aufweist. Bevorzugt kann die Höhe in einem Bereich von 1,5 bis 2,5 mm gewählt werden. Gemäß einer weiteren Ausführungsform der erfindungsgemäßen Trägeranordnung 1 kann die Wärmebarriereschicht 8 auch aus einem geschäumten Material hergestellt und an ihrer Unterseite mit eine Vlies oder Gewebe versehen sein, auch wenn dies vorliegend nicht dargestellt ist.

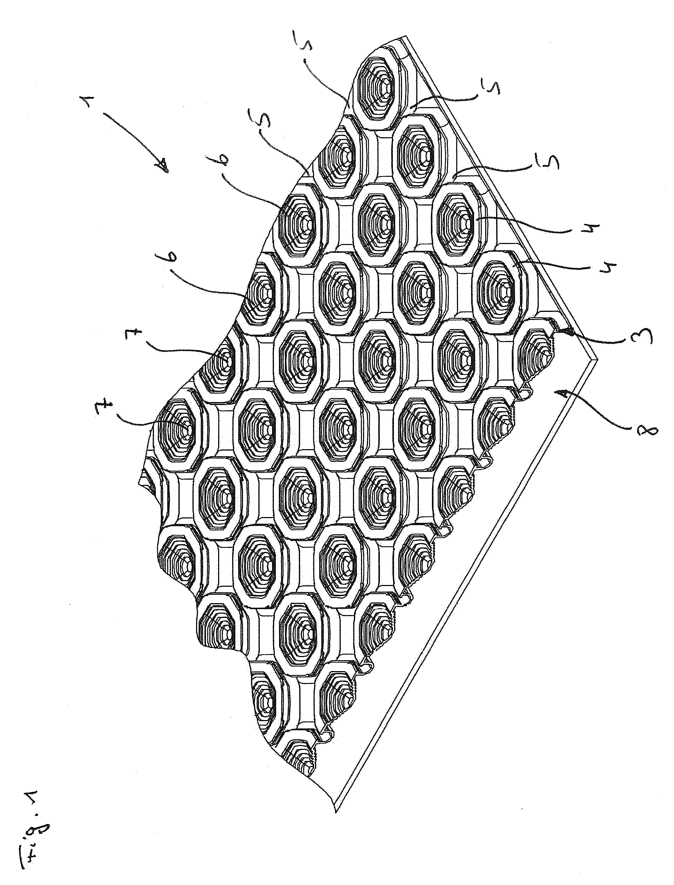

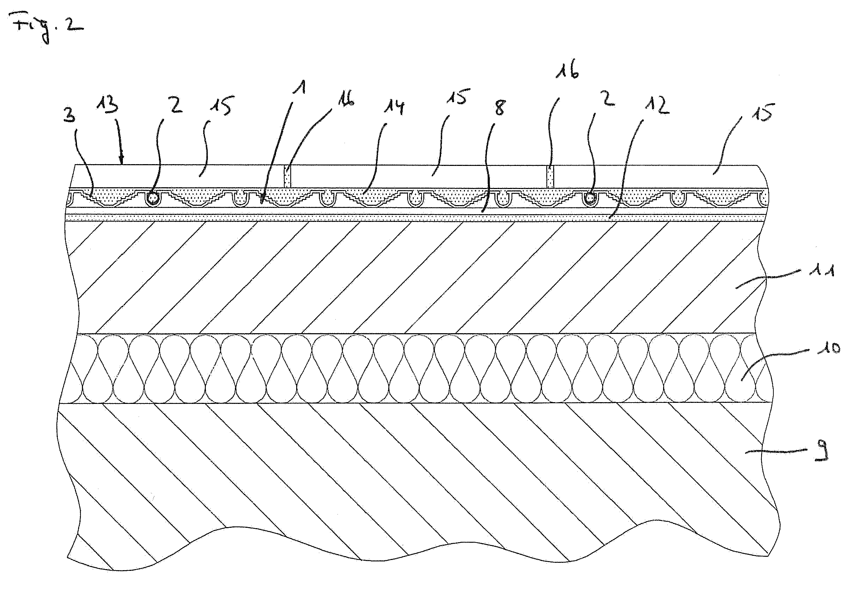

Figur 2 zeigt einen möglichen Aufbau unter Verwendung der in Figur 1 dargestellten Trägeranordnung 1. Der Aufbau umfasst als unterste Schicht einen tragenden Untergrund 9, bei dem es sich beispielsweise um einen Betonboden handeln kann. Auf dem Untergrund 9 ist eine herkömmliche Dämmschicht 10 positioniert, die aus einzelnen Dämmplatten besteht. Die Dämmplatten können, wie es vorliegend der Fall ist, lose auf den Untergrund 9 aufgelegt sein. Sie können aber auch unter Verwendung eines Mörtels oder Klebers am Untergrund 9 fixiert werden. Anstelle von Dämmplatten kann zur Bildung der Dämmschicht 10 auch eine Schüttdämmung verwendet werden. Oberhalb der Dämmschicht 10 ist eine Estrichschicht 11 angeordnet, mit der die Unterseite der Trägeranordnung 1 verklebt ist. Als Kleber 12 kann hier beispielsweise ein Fliesenkleber oder dergleichen verwendet werden. Aufgrund der Tatsache, dass die Wärmebarriereschicht 8 aus einem Vliesmaterial hergestellt ist, verkrallt sich der Kleber während des Verklebens der Trägeranordnung 1 gut an der Wärmebarriereschicht 8, wodurch ein sicherer Halt erzielt wird. Analoges gilt auch dann, wenn die Unterseite der Trägeranordnung 1 durch die zuvor genannte Haftvermittlerschicht aus Vlies oder einem Gewebe gebildet ist. An der Oberseite der Trägeranordnung 1 sind ein oder mehrere Heizkabel 2 in einigen der hierfür vorgesehenen Heizkabelaufnahmekanäle 5 aufgenommen. Oberhalb der Trägeranordnung 1 ist ein Bodenbelag 13 vorgesehen, der mit der Oberseite der Trägeranordnung 1 unter Verwendung eines geeigneten Klebers 14 verklebt ist, der sich in den Hinterschneidungen verkrallt, die an den Erhebungen 4 vorgesehenen sind. Bei dem Kleber 14 kann es sich um Fliesenkleber handeln, um nur ein Beispiel zu nennen. Der Bodenbelag wird vorliegend durch Plattenelemente 15 gebildet, bei denen es sich um Fliesen, Steinplatten oder dergleichen handeln kann, wobei die zwischen den Plattenelementen 15 vorhandenen Fugen 16 mit einem geeigneten Fugmaterial gefüllt sind. Alternativ kann als Bodenbelag beispielsweise aber auch ein Holzboden installiert werden.

Ein wesentlicher Vorteil, der mit der Verwendung der erfindungsgemäßen Trägeranordnung 1 einhergeht, besteht darin, dass Dank der Wärmebarriereschicht 8 sichergestellt ist, dass während des Anfahrens der Flächenheizung die von den elektrischen Heizkabeln abgegebene Wärmeenergie zu überwiegenden Teilen zur Oberseite der Trägeranordnung 1 und damit in Richtung des Raumes abgegeben wird. Entsprechend kann die Aufheizzeit einer elektrischen Flächenheizung Dank der Wärmebarriereschicht 8 stark verkürzt werden. Untersuchungen haben ergeben, dass hierbei Verbesserungen von bis zu 40% realisierbar sind. Aufgrund der geringen Dicke der Wärmebarriereschicht 8 wird trotzdem ein verhältnismäßig geringe Gesamtaufbauhöhe der Trägeranordnung 1 sichergestellt, so dass sich diese auch auf bereits bestehenden Estrichen im Rahmen von Renovierungs- oder Sanierungsarbeiten nachträglich installieren lässt. Der folienartige Werkstoff der Trägerschicht 3 sowie das für die Wärmebarriereschicht 8 gewählte Material verleihen der Trägeranordnung 1 insgesamt eine Elastizität, die eine Entkopplung zwischen der Estrichschicht 11 und dem Bodenbelag 13 bewirkt, die eine Übertragung von Spannungen verhindert, die beispielsweise durch unterschiedliche Ausdehnungen der Estrichschicht 11 und des Bodenbelags 13 aufgrund verschiedener Wärmeausdehnungskoeffizienten der entsprechenden Materialien hervorgerufen werden. Die große Fläche, die von den Kabelaufnahmekanälen 5 und dem jeweiligen Grund 7 der Vertiefungen 6 bezogen auf die Gesamtfläche der Trägeranordnung eingenommen wird, sorgt für einen guten Lastabtrag zur Estrichschicht 11, was zu einer sehr belastbaren Anordnung führt.

### BEZUGSZEICHENLISTE

- 1: Trägeranordnung
- 2: Heizkabel
- 3: Trägerschicht
- 4: Erhebung
- 5: Heizkabelaufnahmekanal
- 6: Vertiefung
- 7: Grund
- 8: Wärmebarriereschicht
- 9: Untergrund
- 10: Dämmschicht
- 11: Estrichschicht
- 12: Kleber
- 13: Bodenbelag
- 14: Kleber
- 15: Plattenelement
- 16: Fuge

## Patentansprüche

1. Trägeranordnung (1) für elektrische Heizkabel (2) einer Flächenheizung, umfassend eine folienartig ausgebildete Trägerschicht (3) mit aufwärts vorstehenden Erhebungen (4), die zwischen sich Heizkabelaufnahmekanäle (5) zur Aufnahme der elektrischen Heizkabel (2) definieren, **dadurch gekennzeichnet, dass** an der Unterseite der Trägerschicht (3) eine Wärmebarriereschicht (8) befestigt ist, die eine Höhe im Bereich von 1 bis 3 mm aufweist.

2. Trägeranordnung (1) nach Anspruch 1, **dadurch gekennzeichnet, dass** die Wärmebarriereschicht (8) eine Höhe Bereich von 1,5 bis 2,5 mm aufweist.

3. Trägeranordnung (1) nach einem der vorhergehenden Ansprüche, **dadurch gekennzeichnet, dass** die Wärmebarriereschicht (8) aus einem geschäumten Material oder aus einem Vliesmaterial hergestellt ist.

4. Trägeranordnung (1) nach einem der vorhergehenden Ansprüche, **dadurch gekennzeichnet, dass** an der Unterseite der Trägeranordnung (1) eine Haftvermittlungsschicht vorgesehen ist.

5. Trägeranordnung (1) nach einem der vorhergehenden Ansprüche, **dadurch gekennzeichnet, dass** die Wärmebarriereschicht (8) druckstabil ausgebildet ist.

6. Trägeranordnung (1) nach einem der vorhergehenden Ansprüche, **dadurch gekennzeichnet, dass** die Randbereiche der Erhebungen (4) von oben betrachtet Hinterschneidungen aufweisen, die einen Teil der Heizkabelaufnahmekanäle (5) definieren.

7. Trägeranordnung (1) nach Anspruch 6, **dadurch gekennzeichnet, dass** die Abstände zwischen den Erhebungen (4) bezogen auf den Außendurchmesser der aufzunehmenden Heizkabel (2) derart eng sind, dass die Heizkabel (2) zwischen zwei benachbarten Erhebungen (4) von oben nach Art einer Schnappverbindung unter Aufweitung des Abstands in die Heizkabelaufnahmekanäle (5) gedrückt werden können.

8. Trägeranordnung (1) nach einem der vorhergehenden Ansprüche, **dadurch gekennzeichnet, dass** innerhalb der Erhebungen (4) Vertiefungen (6) ausgebildet sind, deren Grund (7) auf Höhe der Unterseite der Trägerschicht (3) angeordnet ist.

9. Trägeranordnung (1) nach einem der vorhergehenden Ansprüche, **dadurch gekennzeichnet, dass** es sich bei der Trägeranordnung (1) um eine aufrollbare Matte handelt.

## Claims

1. A carrier arrangement (1) for electrical heating cables (2) of a panel heater, comprising a film-like carrier layer (3) with upwardly projecting elevations (4) that define between them heating cable receiving channels (5) for receiving the electrical heating cables (2), **characterised in that** a heat barrier layer (8) that has a height in the range of 1 to 3 mm is fastened to the bottom of the carrier layer (3).

2. The carrier arrangement (1) according to Claim 1, **characterised in that** the heat barrier layer (8) has a height in the range of 1.5 to 2.5 mm.

3. The carrier arrangement according to any of the preceding claims, **characterised in that** the heat barrier layer (8) is produced from a foamed material or from a non-woven material.

4. The carrier arrangement according to any of the preceding claims, **characterised in that** an adhesion promoting layer is provided on the bottom of the carrier arrangement (1).

5. The carrier arrangement (1) according to any of the preceding claims, **characterised in that** the heat barrier layer (8) is made to be pressure resistant.

6. The carrier arrangement (1) according to any of the preceding claims, **characterised in that** the edge regions of the elevations (4), as viewed from above, have undercuts that define part of the heating cable receiving channels (5).

7. The carrier arrangement (1) according to Claim 6, **characterised in that** the distances between the elevations (4) are narrow in relation to the outside diameter of the heating cables (2) to be received such that the heating cables (2) can be pressed into the heating cable receiving channels (5) between two adjacent elevations (4) from above in the manner of a snap-on connection by widening the spacing.

8. The carrier arrangement according to any of the preceding claims, **characterised in that** there are formed within the elevations (4) depressions (6) the base (7) of which is at the level of the bottom of the carrier layer (3).

9. The carrier arrangement (1) according to any of the preceding claims, **characterised in that** the carrier arrangement (1) is a mat that can be rolled up.

## Revendications

1. Agencement de support (1) pour des câbles de chauffage électrique (2), comprenant une couche support (3) façonnée sous la forme d'une feuille avec des élévations (4) saillante vers l'avant qui définissent entre eux des canaux de réception (5) pour les câbles de chauffage électriques (2), **caractérisé en ce que** une couche formant barrière thermique (8) est fixée à la coté inferieure de la couche support (3), ladite couche formant barrière thermique présente une hauteur de 1 à 3 mm.

2. Agencement de support (1) selon la revendication 1, **caractérisé en ce que** la couche formant barrière thermique (8) présente une hauteur de 1,5 à 2,5 mm.

3. Agencement de support (1) selon une des revendications précédentes, **caractérisé en ce que** la couche formant barrière thermique (8) est fabriquée à partir d'un matériau alvéolaire ou d'un matériau non-tissé.

4. Agencement de support (1) selon une des revendications précédentes, **caractérisé en ce que** une couche adhésive est prévue à la face inférieure de l'agencement de support.

5. Agencement de support (1) selon une des revendications précédentes, **caractérisé en ce que** la couche formant barrière thermique (8) est formée résistante à pression.

6. Agencement de support (1) selon l'une des revendications précédentes, **caractérisé en ce que** les zones marginales des élévations (4), quand vu d'en haut, présentent des contre-dépouilles définissants une partie des canaux de réception (5) pour les câbles de chauffage électriques.

7. Agencement de support (1) selon la revendication 6, **caractérisé en ce que** par rapport au diamètre extérieur des câbles de chauffage (2) les écarts entre les élévations (4) à recevoir sont tellement étroits, que les câbles de chauffage (2) peuvent être pressés de haut, sous forme d'un encliquetage, en élargissant la distance, entre deux élévations (4) avoisinantes.

8. Agencement de support (1) selon une des revendications précédentes, **caractérisé en ce que** des dépressions (6) sont formées dans les élévations (4), le fond (7) des celles-ci est disposé au niveau de la coté inférieure de la couche de support (3).

9. Agencement de support (1) selon une des revendications précédentes, **caractérisé en ce que** l'agencement de support (1) est une natte de manière à pouvoir être enroulée.
